# EUROPEAN PATENT SPECIFICATION

(11) **EP 2 504 951 B1**
(45) Date of publication and mention of the grant of the patent: **31.07.2019**
(21) Application number: 09851514.1
(22) Date of filing: 23.11.2009
(51) Int. Cl.: H04L 12/24, H04W 24/00, H04L 12/26, H04L 29/08, H04M 3/22

(54) **A METHOD AND ARRANGEMENT FOR PROVIDING USER RELATED TRAFFIC STATISTICS**
VERFAHREN UND ANORDNUNG ZUR BEREITSTELLUNG VON BENUTZERBEZOGENEN VERKEHRSSTATISTIKEN
PROCÉDÉ ET DISPOSITIF DE FOURNITURE DE STATISTIQUES DE TRAFIC RELATIVES À UN UTILISATEUR

(43) Date of publication of application: 03.10.2012
(73) Proprietor: Telefonaktiebolaget LM Ericsson (publ), 164 83 Stockholm (SE)
(72) Inventor: NORHAMMAR, Björn, SE-182 74 Stocksund (SE); BOBERG, Christer, SE-137 55 Tungelsta (SE)
(74) Representative: Brann AB
(86) International application number: PCT/SE2009/051316
(87) International publication number: WO 2011/062530

(56) References cited:
- WO-A1-03/096729
- WO-A1-2005/071890
- WO-A2-2006/052269
- US-A1- 2003 186 693
- US-A1- 2004 165 561
- US-A1- 2005 032 527
- US-A1- 2005 128 946
- US-A1- 2005 138 163
- US-A1- 2006 062 205

## Description

### TECHNICAL FIELD

The claimed invention refers to a method and an arrangement for providing enhanced user experience to users on the basis of intercepted user traffic data.

### BACKGROUND

Portable and wireless user equipments, or terminals, presently available on the market may be adapted to collect a limited amount of user traffic statistics by acquiring local user traffic data from a database of a respective user equipment and by processing such data accordingly. Statistics which has been obtained this way is however terminal platform dependent, and, as such this type of statistics based services cannot be launched as an operator differentiating service. No demand for standardization of terminal platforms exist today, and as a consequence, differences between different terminal platforms is a considerable obstacle for enabling user statistics originating from the different user equipments to be collectable by a general application.

Consequently, terminal based solutions for collection and processing of user traffic statistics are neither suitable nor feasible, especially in situations when a subscriber has registered two or more clients for user traffic interception and processing of such data.

US 2005/032527 A1 describes a method and apparatus for recording and generating additional information related to telecommunication events using a mobile communication device. Recording of information such as GPS coordinates that indicate a position of the mobile communication device during a communication event is explained, as well as a location of a sender or receiver of data to or from the mobile communication device, in order to generate a log entry of the position of the mobile communication device as well as other useful information that are associated with the communication events.

WO 2005/071890 A1 describes a system and a method for monitoring digital mobile communications networks for purposes, such as a test, trouble shooting, and evaluation of a network and its usage. The method includes inputting network data captured from a digital mobile communications network. The network data includes data for a plurality of communications sessions over the network. The network data further includes a plurality of session related parameters. The method further includes inputting query data for one or more queries, wherein a query of the one or more queries defines a statistic relating to one or more of the parameters to be computed from the network data. Furthermore, the method includes formatting the query to define the statistic in terms of one or more intermediate statistics relating to the one or more parameters and to be computed from the network data. The statistic is computable from one or more sets of the one or more intermediate statistics. Additionally, the method includes operating with said formatted query on said captured network data to determine the one or more intermediate statistics and further includes storing the intermediate statistics in a data store for analysis.

US 2005/128946 A1 describes a network statistics information service system comprised of a service provider system having a database for storing statistics data and statistics information collection conditions for each user. The network statistics information service system further includes an access server for receiving, upon the authentication of a user terminal, a response packet indicative of the result of authentication, a request source user ID, the statistics information collection conditions, and statistics parameters from the service provider system. The access server collects statistics information for each user according to the statistics information collection conditions and the statistics parameters indicated by the response packet while the user terminal is connected to the Internet, and notify the service provider system of updated statistics data. The service provider system updates the database based on the data received from the access server and discloses at least a part of the statistics data accumulated in the database in response to a request from the user terminal.

WO 03/096729 A1 describes that in a mobile network, a packet interface is monitored by a tap in a non-intrusive manner. Captured transaction data is uploaded to a probe link to one or more taps. The probe acts as a slave to a server, activating and terminating data capture. A coordinator of the probe manages data capture and buffering according to the server. The server filters the data according to a subscriber registry and loads data until there are complete protocol descriptions. These provide real time subscriber-centered QoS metrics.

### SUMMARY

It is an object of the present document to address at least some of the problems outlined above. It is also an object to provide a mechanism for obtaining user traffic statistics on users, where each user may be registered to one or more clients. It is another object to assemble the statistics, such that it can be presented to a user in an informative way.

According to different aspects a method and arrangements are provided which enable collection of user traffic data and processing of the collected data, such that user traffic statistics can be provided on the basis of the processed data.

In one aspect, a method for providing user traffic statistics on user traffic generated in the communication network, is provided. The user traffic statistics involve at least one client to which a first user, which is a subscriber of a user traffic statistics service is registered, and one or more other clients, where each of the one or more other clients is registered to another user than the first user. The method, which is executable on a server, use user traffic data, which is associated with the clients, and which is being intercepted by a traffic intercepting unit. On the basis of the intercepted data it is determined if any user traffic data, associated with the first user is already stored on the server, and in case any such data is identified it is aggregated with the received associated data according to pre-defined aggregating rules that define a time limit for how old data to be aggregated can be, such that user traffic associated with any client of the subscriber is aggregated. The aggregated and/or received data is then processed on the basis of pre-defined processing criteria, such that updated user traffic statistics on traffic associated with said subscriber is obtained, wherein the pre-defined processing criteria specifies which type of said user traffic data is to be kept updated for which of said at least one client of said subscriber or said one or more clients being registered to said user other than the first user, after which the processed data is stored, such that subsequent distribution of updated traffic statistics can be provided, whenever required.

The processed user traffic data may be stored on a per callee basis and/or on a per caller basis. These are issues which can be pre-defined, and which will determine how the records for respective clients may be put together.

The processed user traffic data may typically be stored on a per client basis for each client registered to a
respective callee' and/or caller, such that more or less detailed user traffic statistics may later be obtained.

The aggregation of user traffic data is typically performed on related user traffic data that has been intercepted and stored within a pre-defined time interval, such as e.g. data stored for the last 24 hours, one or more weeks, or monthts. The aggregation is typically also performed on user traffic data on connections established between the specified clients.

The user traffic data to be intercepted may comprise a number of different variables, wherein the data may comprise one or more of client and/or user identity related information, location related information and connection duration related information.

Also the aggregation of user traffic data may be performed according to pre-defined rules, which may have been specified at least partly by the operator of the user statistics service and/or by the subscriber.

In addition to what has been mentioned above, the user traffic statistics may be distributed to an application server, from where the statistics can be accessed by a client.

Alternatively, the processed user traffic statistics may be distributed directly to one or more of the clients, thereby enabling graphic presentation of the statistics on a user interface of the client.

In another aspect, an arrangement for providing user traffic statistics on user traffic generated in the communication network is provided. The statistics involve at least one client to which a first user, being a subscriber of a user traffic statistics service, is registered, and one or more other clients, each of which is being registered to a user other than the first user. The arrangement comprises a receiving unit, adapted to receive, user traffic data which is associated with the clients, from at least one traffic intercepting unit. The arrangement also comprises an aggregating unit, adapted to determine whether any user traffic data associated with the first user and the user other than the first user, is stored at a storing unit of the arrangement, and to aggregate the received data with any such data according to pre-defined aggregating rules that define a time limit for how old data to be aggregated can be, such that user traffic data associated with any of the clients of the subscriber is aggregated.

In addition, the arrangement comprises a processing unit, adapted to process said aggregated and/or received data on the basis of pre-defined processing criteria, such that updated user traffic statistics on traffic associated with the subscriber is obtained, where the processing criteria specifies which type of said user traffic data is to be kept updated for which of said at least one client of said subscriber or said one or more clients being registered to said user other than the first user. Furthermore, the processing unit is adapted to store the user traffic statistics in the storing unit, thereby enabling subsequent distribution of updated user traffic statistics via a transmitting unit. The transmitting unit distributes the processed user traffic statistics to an application server, from where said at least one client of said subscriber or said one or more other clients registered to said user other than the first user can access said user traffic statistics.

For the purpose of distribution of the user traffic statistics, the transmitting unit may be adapted to apply message types, such as e.g. a SIP PUBLISH, a SIP MESSAGE or an XCAP PUT.

According to one exemplified embodiment, the suggested arrangement is configured as an integrated part of a server, and more specifically the server may be configured as a Presence Server, if presence is applied.

The suggested concept is not restricted to certain types of means of communication, but is instead adapted to make use of user traffic data associated with all types of connections which may be set up between registered clients which are connected to a communication network.

Furthermore, in addition to subscribing to your own user statistics, it will also be possible to get access to user statistics of other users.

In addition, since the user statistics concept is network based, user traffic data originating from clients which reside on different types of user equipments may be used and processed, such that an overall view of a subscribing users behavior pattern can be obtain, also for subscribers which are registered to a plurality of clients.

Further possible features and benefits of the described concept will become apparent from the detailed description below.

### BRIEF DESCRIPTION OF THE DRAWINGS

The invention will now be described in more detail by means of exemplary embodiments and with reference to the accompanying drawings, in which:
- Figure 1 is a schematic block diagram, illustrating a scenario for intercepting user traffic data which relates to a plurality of clients, each of which is registered to a respective subscriber.
- Figure 2 is a schematic block diagram, illustrating a scenario for providing user traffic statistics in a communication network, according to one exemplary embodiment.
- Figure 3 is another schematic block diagram, illustrating another scenario for providing user traffic statistics in a presence enabled communication network, according to another exemplary embodiment.
- Figure 4 is a schematic block diagram, illustrating in more detail an arrangement, adapted to provide user traffic statistics by way of executing a method according to the embodiment described with reference to figure 2 or 3.
- Figure 5 is a flow chart, illustrating a method for performing a user traffic related process which is suitable to be executed by an arrangement, such as the one described in figure 4.

### DETAILED DESCRIPTION

The claimed invention refers to an arrangement and a method for providing user traffic statistics on traffic involving one or more clients to which a subscriber of a user traffic statistic service has been registered, and one or more other client, each of which being registered to another user. By enabling user traffic statistics which is covering all or most ways of communications provided via a communications network to be easily selectable and accessible to users of such a service an enhanced statistics service can be provided, which is independent of the platform used by the respective communicating clients.

The suggested user traffic statistics mechanism is adapted to consider user traffic data for one or more clients, registered to the same user, and to aggregate this data, such that is can be processed and presented as overall statistics for the respective user. In the present context user traffic is to be interpreted as disclosing network based connections, such as e.g. telephone calls, and initiated network based services, such as e.g. SMS's , MMS's, and notifications . The acquired user traffic statistics may comprise statistics on connections and services involving at least two subscribing users and may in its simplest form comprise statistics on the number of calls and/or services the users have been involved in during a certain time interval.

From hereinafter a user having registered one or more clients for a service which is based on the suggested user traffic statistics mechanism will be referred to as a subscriber for this service. A subscriber may have registered one or more clients, each of which is residing on a wireless device, such as e.g. a cellular telephone or a laptop, and/or one or more stationary devices, such as e.g. a PC or a stationary telephone.

In order to be able to provide the suggested mechanism and associated service, a specially adapted arrangement which is typically configured as being a part of a server, such as e.g. an application server, which is adapted to manage user traffic data, is provided.

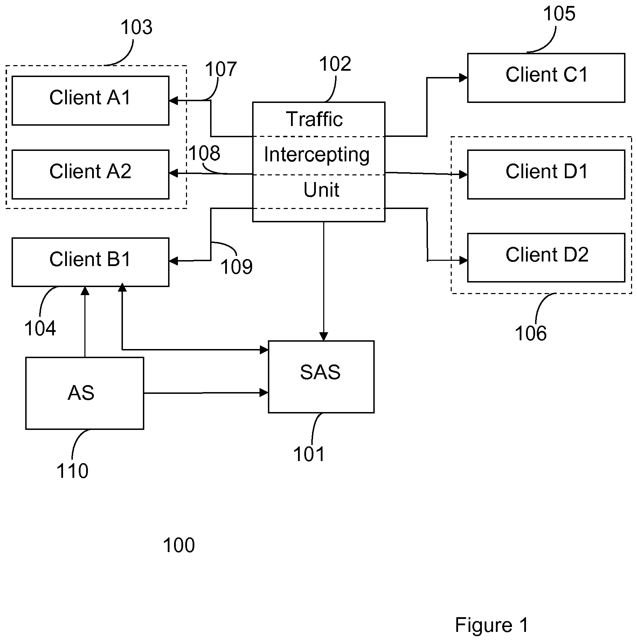

A simplified overview of a network architecture which is suitable for providing traffic statistics services to registered subscribers will now be described with reference to figure 1. It is to be understood that even though a communication system, such as the ones described below with reference to figures 1, 2 and 3, respectively, normally comprise additional network nodes, such as e.g. an MMTEL AS, nodes, which are not necessary for the understanding of the claimed invention, have been omitted in the figures for simplicity reasons.

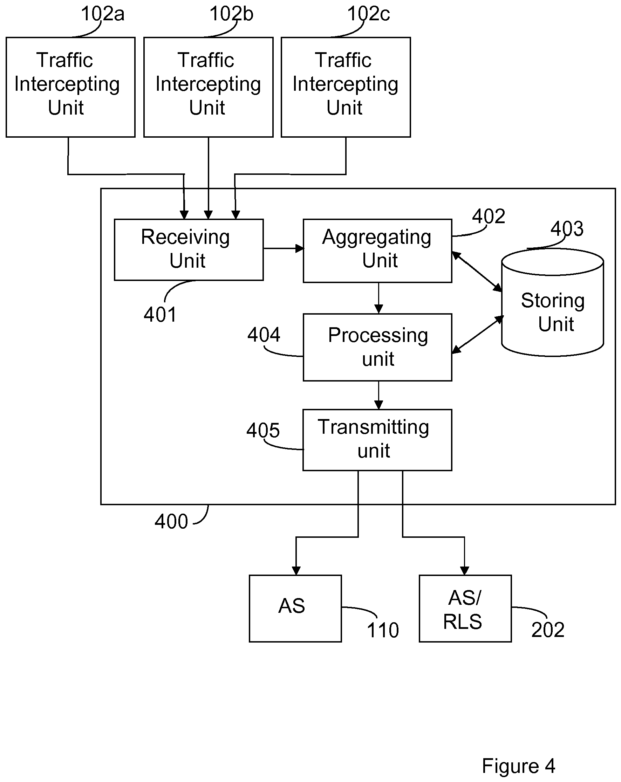

According to figure 1 a communication network 100 comprises an Application Server, which in the present context will be referred to as a Statistics Application Server (SAS) 101. SAS 101 is an application server which has been specially adapted to provide user traffic statistics according to a suggested user traffic statistics mechanism. One exemplifying configuration of such functionality will be described in further detail below with reference to figure 4.

The SAS 101 is connected to one or more traffic intercepting units, here represented by traffic intercepting unit 102, where a traffic intercepting unit may be a network sniffer, a call aware client or network node, a Presence Network Agent (PNA), a Short Message Service Center (SMS-C), a Mobile Switching Center (MSC), a presence server which is adapted to fetch user traffic related data from a service, a PNA, or any other type of conventional entity which comprise functionality suitable for intercepting selected data on user traffic between clients. In a typical scenario only clients registered to users which has approved of interception are considered for such a process.

It is also to be understood that although figure 1 comprise only one traffic intercepting unit, a typical network configuration will comprise a plurality or even a significant number of traffic intercepting units, distributed over the communication network 100, such that a more or less complete coverage of the user traffic established between clients of the communications network 100 is obtained.

Each traffic intercepting unit 102 is configured to intercept certain categories of user traffic data, typically on any type of established connections, including e.g. conventional telephone calls, chat sessions, SMS, MMS, and file transfers, between two or more clients. Such data may typically include one or more categories of data which enables the respective client and/or associated user to be identified, time stamps and/or data which enables a respective client to be localized.

In figure 1, two clients, namely client A1 and A2, are registered to a first subscriber 103, while another client B1, is registered to a second subscriber 104. Client C1 is registered to a third subscriber 105, while clients D1 and D2 are registered to a fourth subscriber 106.

According to figure 1, the traffic intercepting unit 102 is intercepting one ongoing communication session 107 between client A1 and C1, another session 108 ,involving client A2 and D1, and a third session 109 between client B1 and D2.

The traffic intercepting units of communication network 100 may be adapted to intercept data on any type of established connections between two or more clients, or a limited number of communication types. The SAS 101 is adapted to process user traffic related data that can be used to form various types of user traffic statistics involving one or more clients which have been registered for such a service by a respective subscriber. User traffic statistics intercepted by a traffic intercepting unit 102 and processed by a SAS 101 may be provided either
directly to a respective client requesting such information, such as e.g. client B1 of subscriber 104, as indicated in figure 1, or via a separate, intermediate application server 110, from which any registered client may obtain user traffic statistics for presentation at the respective client.

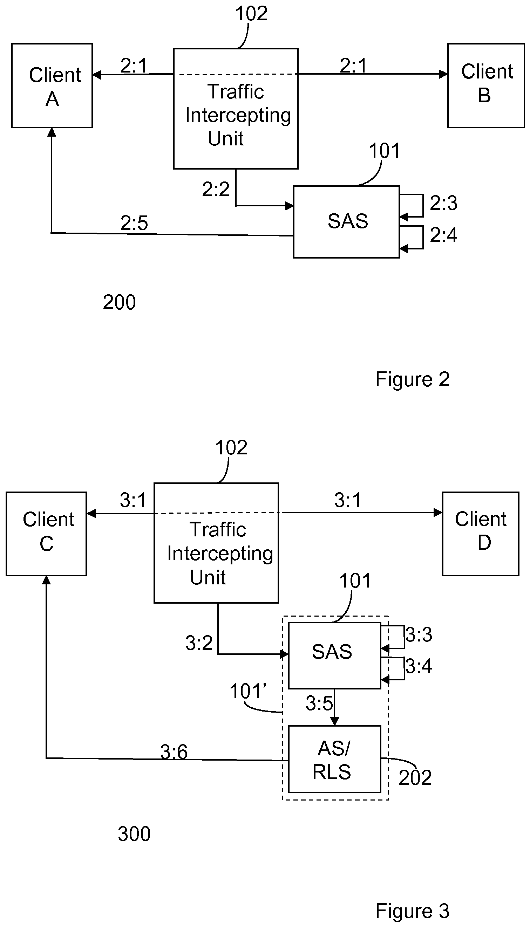

A simplified communication system, suitable for applying the suggested user traffic statistics mechanism according to two different embodiments will now be described in more detail with reference to figures 2 and 3, respectively.

In a first step 2:1 of figure 2, a connection is established between client A and client B, each of which are typically residing in a cellular telephone, PC, laptop, or any other type of fixed or portable communication device. In addition, a client may also reside on a server, typically an application server, such that also user traffic involving communication between a first client, initiating a session with a specific service which is provided via a second client of an application server, can be registered. Such a service may e.g. comprise transmission of pictures via IMS file transfer, and may be identifiable via its IP-address.

Traffic intercepting unit 102 intercepts data on the established communication session and in a next step 2:2, the intercepted data is provided to SAS 101. The traffic intercepting unit 102, as well as any other traffic intercepting unit which may be distributed over a communication network 200, may be more or less sophisticated, but may in its simplest form be configured to intercept data that a connection has been established between two or more clients, registered to a respective user.

In subsequent steps 2:3 and 2:4, the intercepted data is processed and stored by SAS 101, such that updated user traffic statistics on at least client A or client B is provided. More specifically, in step 2:3, the intercepted data is processed for any of clients A and B, which are registered for the suggested user traffic statistics service.

If any user traffic statistics related data associated with any of client A and B is already stored, the associated intercepted data is first aggregated with the previously stored data, after which the aggregated data is processed. The aggregated and/or stored data is then stored as indicate with another step 2:4. One or both of the aggregation and processing may be executed on the basis of pre-defined rules, which may have been specified at least partly by the operator of the service and/or by the subscriber for which user traffic statistics is provided.

User traffic data acquired in step 2:2 may be processed by SAS 101 in a number of different ways, depending on what user traffic statistics that is required for a respective subscriber. User traffic statistics may e.g. be provided on the total number of voice calls, messages, e-mails, SMS, MMS, chat sessions to an unlimited, or a limited number of other users. Alternatively, or in addition, statistics on established connections as a function of distance between clients, or call length of sessions established between clients may be provided.

Another example of statistics suitable for collection and logging is information on the position or location of a client upon initiation of a communication. Such statistics may later be presented on a map, giving a subscriber an overview of where he has been located when certain clients have been contacted.

In a final step 2:5, user traffic statistics, requested by a client, in this case client A is provided to client A, where it can be presented via a conventional UI. Such a distribution may be achieved using any type of conventional distribution mechanism.

In the present scenario, the distribution procedure is managed by SAS 101, but as indicated above, with reference to figure 1, statistics processing and statistics distribution functions may alternatively be divided into two separate functional entities, e.g. such that processed user traffic statistics is provided to a second server (not shown), from which the user traffic statistics may be acquired by one or more clients, which are subscribing to the respective statistics. User traffic statistics may e.g. be distributed to one or more clients via notifications.

A subscriber subscribing for user traffic statistics may e.g. specify for which users, or callee's that he wants updated user traffic statistics to be processed and stored, where, in such a case, user traffic statistics will be stored on a per callee basis. User traffic statistics involving such selected callee's will typically later be accessible by one or more registered clients, e.g. in the form of notifications, distributed according to a predefined notification scheme, all according to conventional notification procedures, or by means of any other conventional distribution means.

A model for distributing user traffic statistics which is based on notifications is especially suitable when the interception and processing is based on non-call related user traffic, such as e.g. location data, indicating the location of clients of interest relative one or more clients of the subscribing user.

Alternatively, user traffic data may instead be stored on a per caller basis, where a subscribing client keeps track of the communication with other clients/users, and is updated with such data according to a specified scheme.

In addition to providing raw statistics which refer to established connections, which may also include data on unsuccessful connection attempts, the processing steps of user traffic related data may also be configured to derive one or more related variables, which may be useful for deriving and presenting suitable user statistics. Such additional statistics may e.g. comprise a set of variables where each variable is indicating an aggregated communication frequency as a relative value.

According to one possible embodiment such a value, may be displayable at a UI of a subscriber as a certain distance relative a central point, representing the subscriber requesting relevant user traffic statistics, where each distance depends on the communication frequency between the subscriber and a respective other user and its registered clients. Such a distance may e.g. be shorter, the more connections that have been established with the respective user.

Another variable may instead indicate an average length of all connections established between the subscriber and another user, such that users being involved with long lasting connections with the subscriber are rewarded with a variable having a relatively large value, which is proportional to the average duration of the registered calls.

By applying different variables, e.g. such as any of the ones described above, either alone or in combination with more traditional statistics, a subscriber being provided with such updated data may use the acquired data for presenting enhanced user traffic statistics views, which may be easier to interpret than corresponding data presented via conventional graphical user interfaces. In other words, a user may specify user traffic statistics associated with a specified group of users/clients, such as e.g. the 10 most popular of the address book of the subscriber, such that only communication sessions involving any client registered to a user belonging to the selected group will be processed.

To exemplify, updated user traffic statistics, comprising variables, such as the ones described above, which are distributed to one or more clients, may be used by these clients as input data to a selected statistics service.

With a symbol representing the subscriber located in the center of the display of a user device on which a client registered to the subscriber resides, the other users may be represented by other significant symbols, encircling the subscriber, such that each registered user/client is located at a given distance from the centre of the display, i.e. from the subscriber. User traffic statistics processed and presented according to this principle may be referred to as a circle of friends concept.

In addition to illustrating statistics, such as e.g. a frequency of calls, average length of communications as a relative length, the position of the display may also be used as an indication of other statistical data, and/or other data.

The statistics may e.g. be arranged such that a specific client/user is presented on a position on the display which corresponds to the time of the day when connections are usually established with the respective user/client, or if the displayed statistics is to reflect the present content of the address book of a subscribing user, a symbol representing a specific client/user may be displayed on a position corresponding to the time of the day for a next planned meeting or event.

If instead a location dependent statistics map is to be applied user statistics information may be distributed over different regions, such that a user is provided with an overview of his user pattern in relation to different geographical locations.

Depending on the required presentation options different data may be intercepted and/or stored and processed.

In a typical scenario time stamps may be stored together with data on the clients involved in a respective communication session. In addition relevant location data which enables the respective clients to be located may be used during processing of the intercepted data. For a fixed client location based information, such as e.g. a position, area home network or WLAN hotspot may be determined on the basis of the clients IP number, whereas the corresponding location based information for a mobile client may be obtained from the respective clients mobile network positioning server.

Figure 3 is a simplified system overview of another typical communication network 300, in which the user traffic statistics mechanism described above may be applied. Communication network 300 of figure 3 comprises functionality which enables users to subscribe to a presence related service, such as e.g. IP Multimedia Subsystem (IMS) Presence. In a presence service context a first user subscribing to data about one or more other users/clients, is typically referred to as a Watcher, while another user allowing a Watcher to get access to data about itself and its activities is referred to as a Presentity. In figure 3 client C is a client which can be referred to as a Watcher, and as such a subscriber of user traffic statistics, while client D represents a Presentity, for which client C have access to presence related data, in the present case user statistics related presence data.

The suggested communication network 300 also comprises an Application Server (AS), which may typically be a Presence Server (PS), provided with Resource List Server (RLS) functionality, thereby disclosing a combined AS/RLS 202. In the present example the AS and the RLS have been illustrated as one single entity, but these two entities may alternatively be configured as separate, interacting entities.

The IMS enabled network 300 typically also comprise a number of network sniffers, or any other type/s of user traffic intercepting units, here represented by traffic intercepting unit 102. In order to enable user traffic data to be collected and processed accordingly, communication network 300 also comprises an SAS 101, which is configured to provide user traffic statistics according to preferences specified by the subscriber and/or the service provider.

In a first step 3:1, a connection is established between client C and client D. Traffic intercepting unit 102 is intercepting user traffic related data which is provided to SAS 101, or integrated SAS/PS/RLS 101', in another step 3:2, typically via a publication, such as e.g. a SIP Publish, or a SIP Message, transmitted on behalf of client C.

The latter form of transportation may be preferred if the traffic data only refers to basic data, such as e.g. an indication that a telephone call has been established between client C and client D, while the former form of transportation may instead be preferred if data, such as e.g. the session state associated with an established connection is also to be intercepted.

In subsequent steps 3:3 and 3:4, aggregated and/or intercepted data is processed and stored, respectively, as suggested above, with reference to figure 2.

As already mentioned above, SAS 101 is adapted to aggregate intercepted user traffic data with any previously stored, associated user traffic data if such data can be identified, and to process the acquired data, such that requested user traffic statistics can later be acquired by a requesting client.

Once processed and stored, the updated user traffic statistics is provided to the AS/RLS 202, typically in a SIP MESSAGE or a SIP PUBLISH, as indicated with another step 3:5. If AS/RLS 202 is configured as a Persistent Presence XDMS, the user traffic statistics may alternatively be provided from SAS 101 to the Presence XDMS via XCAP PUT messages.

At the AS/RLS 202, the received user traffic statistics can be treated in a conventional way as any type of data which is to be notified to one or more subscribing Watchers, i.e. the received data is typically stored, and provided to one or more Watchers, in this case Client C, typically according to an applicable, conventional notification scheme, as indicated with a final step 3:6.

An arrangement 400 which is adapted to be used according to any of the exemplifying embodiments above, i.e. an arrangement which provides functionality adapted to provide user traffic statistics will now be described below, with reference to figure 4.

As indicated above, arrangement 400 is typically part of a server, such as the SAS, described above with reference to any of figures 1, 2 or 3.

Arrangement 400 comprises a Receiving Unit 401, which is adapted to receive intercepted user traffic data from one or more different traffic intercepting units 102a,102b,102c, which may be configured as one, or a plurality of different types of conventional intercepting units. Arrangement 400 also comprises an Aggregating Unit 402, which is configured to store intercepted user traffic data in a Storage Unit 403, which may constitute any type of conventional memory means.

On the basis of intercepted and/or received user traffic data, the aggregating unit 402 is adapted to identify any associated user traffic data that is already stored at storage unit 403, i.e. to update any user traffic data record which is to be maintained and updated. Such identification is made according to pre-defied aggregating criteria, which is specifying what kind of user traffic statistics that is to be updated for a number of users. As indicated above, such criteria may be specified a pre-defined rules by an operator and/or subscriber. A Processing Unit 404, is adapted to receive aggregated, and/or recently received user traffic data from the aggregating unit 402, and to process the acquired user traffic data, thereby deriving updated user traffic statistics, according to pre-defined processing criteria. The processing unit 404 is also adapted to store the obtained data and statistics in the storing unit 403. Also the processing criteria may be specified as pre-defined rules, by the operator and/or subscriber.

The arrangement 400 also comprises a Transmitting Unit 405, which is configured to provide the updated user traffic statistics obtained from the processing unit 404, to a PA/RLS 202, or any other server 110 or arrangement, which comprises functionality for enabling distribution of user traffic statistics to clients, which are subscribing or requesting for such data, and such that this data can be used for displaying user traffic statistics to a user in a user friendly and informative way. It is to be understood that arrangement 400 is a simplified configuration, where units which may be commonly used for enabling communication in the present context, but which are not necessary for the understanding of the suggested user traffic related statistics mechanism have been omitted for simplicity reasons.

Thus, the processing unit may be adapted to aggregate related user traffic data which has been stored within a pre-defined time interval. The aggregating unit may be adapted to aggregate user traffic data on connections which have been established between said clients. The aggregating unit may be adapted to aggregate said user traffic data according to pre-defined aggregating rules. The processing may be performed according to pre-defined processing rules. In some embodiments the transmitting unit may be adapted to distribute the processed user traffic statistics in any of the following message types: a SIP PUBLISH; a SIP MESSAGE or an XCAP PUT.

The processing unit may be adapted to obtain updated user traffic statistics on at least one of:
- the number of established connections involving said subscriber and said at least one second user,
- the number of established connections involving said subscriber as a function of the distance between said subscriber and said at least one second user.
- the number of established connections involving said subscriber as a function of the duration of the connections established between said subscriber and said at least one second user.

The arrangement may be configured as an integrated part of a server. The Server may be a Presence Server.

From an implementation point of view, the user traffic statistics mechanism suggested in this document requires no changes to the 3GPP or OMA standards, when used in the context of presence services.

As already indicated above, the suggested mechanism also supports use cases where a subscriber is registered to two or more clients, such as e.g. one client residing on a PC and another client residing on a cellular telephone, and wants to obtain user traffic statistics which covers user traffic involving all registered clients.

From a user's point of view, the possibility for a user to selectively choose the users for which user traffic statistics is to be aggregated provides for a more selective flow of statistics related notifications, thereby providing for an improved user experience, where only those updates which are required are distributed via the suggested service.

In addition, with the extensive range of available user traffic data, subscribers may have a wide range of selectable options on what kind of user traffic statistics he wants to be updated with.

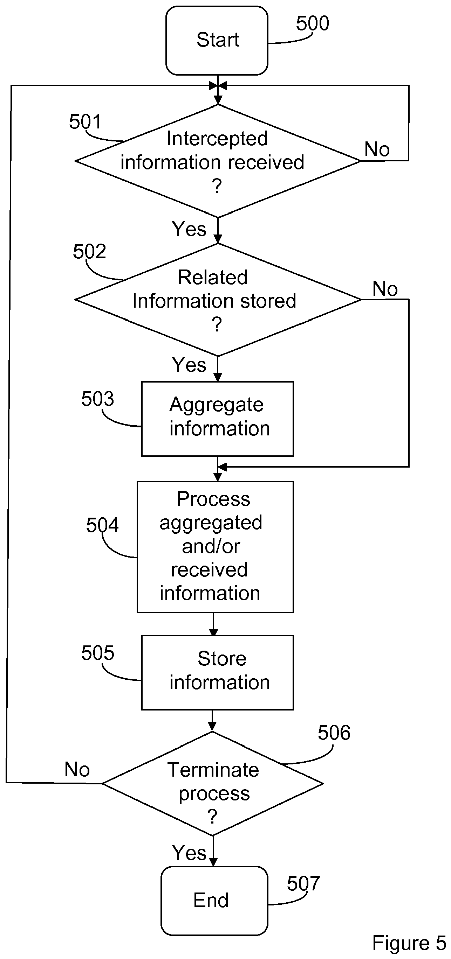

A method for managing user traffic statistics provided from one or more traffic intercepting units will now be described in further detail below, with reference to figure 5.

As a prerequisite it is to be understood that one or more traffic intercepting units are configured to intercept relevant user traffic data, associated with registered clients, on a continuous basis, such that updated user traffic data is continuously provided to the suggested arrangement for managing such data accordingly.

In a first step 500 a user traffic statistics process is started, wherein it is determining whether any updated user traffic data associated with a registered client has been received from any traffic intercepting unit, connected to the arrangement. This is determined in a next step 501.

In a next step 502 it is determined whether there is any related user traffic data already stored at the arrangement. If related data can be identified, the received data is aggregated with the associated stored data according to pre-defined aggregating rules, as indicated with another step 503. Such aggregating rules may typically define a time limit, for how old data that is to be aggregated, and for which clients user traffic is to be intercepted.

In a subsequent step 504, the aggregated and/or received user traffic data is then processed according to pre-defined processing rules. The processing rules will typically specify which types of data records that are to be kept updated for which clients, and will to a large extend determine which graphical UI's that will be accessible, by using the derived user traffic statistics as input data.

Once processed the processed and updated user traffic data is stored, as indicate with a next step 505. On the basis of this updated data user traffic statistics may subsequently be acquired from the arrangement, either by requesting relevant data, or by obtaining updated data, e.g. in the form of notifications, provided from the arrangement. The described process is repeated until it is terminated, as indicated with the final steps 506 and 507.

Furthermore, from a network operator's point of view, the suggested mechanism also enables operators offering the suggested service to compete with a wide range of dynamic services, such as services which are based on the present content of a users address book, which are presently available from most Internet providers.

While the suggested notification concept has been described with reference to specific exemplary embodiments, the description is generally only intended to illustrate the inventive concept and should not be taken as limiting the scope of the invention. The invention is defined by the appended claims.

### ABBREVIATIONS

- PS: Presence Server
- AS: Application Server
- IMS: IP Multimedia Subsystem
- MMTEL: Multimedia Telephony
- RLS: Resource List Server
- SIP: Session Initiation Protocol
- XCAP: Extensible Markup Language Configuration Access Protocol
- XDMS: XML Document Management Server
- XML: Extensible Markup Language

## Claims

1. A method in a communication network for providing user traffic statistics on user traffic generated in said communication network and involving at least one client to which a first user, being a subscriber of a service related to said user traffic statistics, is registered, and one or more other clients each of which is registered to a user other than the first user, the method being executed by a server and comprising the steps of:
- receiving (501) user traffic data, associated with said clients, said user traffic data being intercepted by a traffic intercepting unit;
- determining (502) if any user traffic data associated with any of said first user and said user other than the first user, is stored on said server, and aggregating (503) said any user traffic data with the received data according to pre-defined aggregating rules that define a time limit for how old data to be aggregated can be, such that user traffic associated with any of said at least one client of said subscriber or said one or more other clients being registered to said user other than the first user, is aggregated;
- processing (504) the aggregated and/or received data on the basis of pre-defined processing criteria, such that updated user traffic statistics on traffic associated with said subscriber is obtained, wherein the pre-defined processing criteria specifies which type of said user traffic data is to be kept updated for which of said at least one client of said subscriber or said one or more clients being registered to said user other than the first user;
- storing (505) the processed data to enable distribution of said updated traffic statistics to said at least one client or said one or more other clients; and
- distributing said processed user traffic statistics to an application server, from where said at least one client of said subscriber or said one or more other clients registered to said user other than the first user can access said user traffic statistics.

2. The method according to claim 1, wherein the processed user traffic data is stored on a per callee basis and/or on a per caller basis.

3. The method according to claim 2, wherein the processed user traffic data is stored on a per client basis for each client registered to a respective callee and/or caller.

4. The method according to any of claims 1-3, wherein the aggregation is performed on user traffic data on connections established between said clients.

5. The method according to any of claims 1-4, wherein said user traffic data comprise one or more of:
client and/or user identity related information;
location related information; and
connection duration related information.

6. The method according to any of claims 1-5, wherein said pre-defined aggregating rules are specified at least partly by the operator of the user statistics service and/or said subscriber.

7. The method according to claim 6, wherein said pre-defined aggregating rules are specified such that user traffic statistics involving a limited group of users is processed for said subscriber.

8. The method according to claim 7, wherein the limited group of users is specified according to an electronic address book of said subscriber.

9. The method according to any of claims 1-8, comprising the further step of:
- distributing said processed user traffic statistics to at least one of said clients, thereby enabling graphic presentation of said user traffic statistics on said at least one of said clients.

10. The method according to any of claims 1 or 9, wherein the statistics are presented on the basis of one or more of:
- amount of established connections;
- geographical distribution of established connections;
- lengths of established connections; and
- relative distance between clients involved in established connections.

11. A server (400) in a communications network for providing user traffic statistics on user traffic generated in said communication network and involving at least one client to which a first user, being a subscriber of a service related to said user traffic statistics, is registered, and one or more other clients, each of which being registered to a user other than the first user, the server comprising:
- a receiving unit (401), adapted to receive, from at least one traffic intercepting unit, user traffic data associated with said clients;
- an aggregating unit (402), adapted to determine whether any user traffic data associated with any of the first user and said user other than the first user, is stored at a storing unit (403) of said server, and to aggregate the received data with said any user traffic data according to pre-defined aggregating rules that define a time limit for how old data to be aggregated can be, such that user traffic data associated with any of said at least one client of said subscriber or said one or more other clients being registered to said user other than the first user, is aggregated;
- a processing unit (404), adapted to process said aggregated and/or received data on the basis of pre-defined processing criteria, such that updated user traffic statistics on traffic associated with said subscriber is obtained, wherein the processing criteria specifies which type of said user traffic data is to be kept updated for which of said at least one client of said subscriber or said one or more clients being registered to said user other than the first user, said processing unit being further adapted to store said user traffic statistics in said storing unit, thereby enabling distribution of updated user traffic statistics via a transmitting unit, wherein said transmitting unit distributes said processed user traffic statistics to an application server, from where said at least one client of said subscriber or said one or more other clients registered to said user other than the first user can access said user traffic statistics.

12. The server (400) according to claim 11, wherein the processing unit (404) is further adapted to store received user traffic data on a per callee basis and/or on a per caller basis.

## Patentansprüche

1. Verfahren in einem Kommunikationsnetzwerk zur Bereitstellung von Benutzerverkehrsstatistiken zu Benutzerverkehr, der in dem Kommunikationsnetzwerk erzeugt wird, und beinhaltend zumindest einen Client, bei dem ein erster Benutzer, der ein Abonnent eines Dienstes in Bezug auf die Benutzerverkehrsstatistiken ist, registriert ist, und einen oder mehrere andere Clients, die jeweils auf einen anderen Benutzer als den ersten Benutzer registriert sind, wobei das Verfahren durch einen Server ausgeführt wird und die folgenden Schritte umfasst:
- Empfangen (501) von Benutzerverkehrsdaten, die mit den Clients verbunden sind, wobei die Benutzerverkehrsdaten durch eine Verkehrsabfangeinheit abgefangen werden;
- Bestimmen (502), ob beliebige Benutzerverkehrsdaten, die mit einem beliebigen von dem ersten Benutzer und dem anderen Benutzer als dem ersten Benutzer verbunden sind, auf dem Server gespeichert sind, und Aggregieren (503) der beliebigen Benutzerverkehrsdaten mit den empfangenen Daten gemäß vordefinierten Aggregationsregeln, die eine Zeitgrenze dafür definieren, wie alt zu aggregierende Daten sein können, sodass Benutzerverkehr aggregiert wird, der mit einem beliebigen von dem zumindest einen Client des Abonnenten oder dem einen oder den mehreren anderen Clients, die auf den anderen Benutzer als den ersten Benutzer registriert sind, verbunden ist;
- Verarbeiten (504) der aggregierten und/oder empfangenen Daten auf Grundlage vordefinierter Verarbeitungskriterien, sodass aktualisierte Benutzerverkehrsstatistiken zu Verkehr in Verbindung mit dem Abonnenten erhalten werden, wobei die vordefinierten Verarbeitungskriterien spezifizieren, welche Art der Benutzerverkehrsdaten für welchen von dem zumindest einen Client des Abonnenten oder dem einen oder den mehreren Clients, die auf den anderen Benutzer als den ersten Benutzer registriert sind, aktualisiert zu halten ist;
- Speichern (505) der verarbeiteten Daten, um Verteilung der aktualisierten Verkehrsstatistiken auf den zumindest einen Client oder den einen oder die mehreren anderen Clients zu ermöglichen; und
- Verteilen der verarbeiteten Benutzerverkehrsstatistiken auf einen Anwendungsserver, von dem aus der zumindest eine Client des Abonnenten oder der eine oder die mehreren anderen Clients, die auf den anderen Benutzer als den ersten Benutzer registriert sind, auf die Benutzerverkehrsstatistiken zugreifen können.

2. Verfahren nach Anspruch 1, wobei die verarbeiteten Benutzerverkehrsdaten auf einer Basis pro Angerufenem und/oder einer Basis pro Anrufer gespeichert werden.

3. Verfahren nach Anspruch 2, wobei die verarbeiteten Benutzerverkehrsdaten auf einer Basis pro Client für jeden auf einen jeweiligen Angerufenen und/oder Anrufer registrieren Client gespeichert werden.

4. Verfahren nach einem der Ansprüche 1-3, wobei die Aggregation mit Benutzerverkehrsdaten an zwischen den Clients hergestellten Verbindungen durchgeführt wird.

5. Verfahren nach einem der Ansprüche 1-4, wobei die Benutzerverkehrsdaten eines oder mehrere des Folgenden umfassen:
Informationen in Bezug auf Client- und/oder Benutzeridentität;
Informationen in Bezug auf Standort; und
Informationen in Bezug auf Verbindungsdauer.

6. Verfahren nach einem der Ansprüche 1-5, wobei die vordefinierten Aggregationsregeln zumindest teilweise durch den Betreiber des Benutzerstatistikdienstes und/oder den Abonnenten spezifiziert werden.

7. Verfahren nach Anspruch 6, wobei die vordefinierten Aggregationsregeln derart spezifiziert werden, dass Benutzerverkehrsstatistiken, die eine begrenzte Gruppe an Benutzern beinhalten, für den Abonnenten verarbeitet werden.

8. Verfahren nach Anspruch 7, wobei die begrenzte Gruppe an Benutzern gemäß einem elektronischen Adressbuch des Abonnenten spezifiziert wird.

9. Verfahren nach einem der Ansprüche 1-8, den folgenden weiteren Schritt umfassend:
- Verteilen der verarbeiteten Benutzerverkehrsstatistiken auf zumindest einen der Clients, wodurch graphische Darstellung der Benutzerverkehrsstatistiken an dem zumindest einen der Clients ermöglicht wird.

10. Verfahren nach einem der Ansprüche 1 oder 9, wobei die Statistiken auf Grundlage von einem oder mehreren des Folgenden dargestellt werden:
- Menge an hergestellten Verbindungen;
- geographische Verteilung von hergestellten Verbindungen;
- Längen von hergestellten Verbindungen; und
- relativer Abstand zwischen Clients, die an hergestellten Verbindungen beteiligt sind.

11. Server (400) in einem Kommunikationsnetzwerk zur Bereitstellung von Benutzerverkehrsstatistiken zu Benutzerverkehr, der in dem Kommunikationsnetzwerk erzeugt wird, und beinhaltend zumindest einen Client, bei dem ein erster Benutzer, der ein Abonnent eines Dienstes in Bezug auf die Benutzerverkehrsstatistiken ist, registriert ist, und einen oder mehrere andere Clients, die jeweils auf einen anderen Benutzer als den ersten Benutzer registriert sind, wobei der Server Folgendes umfasst:
- eine Empfangseinheit (401), die ausgelegt ist, um Benutzerverkehrsdaten, die mit den Clients verbunden sind, von zumindest einer Verkehrsabfangeinheit zu empfangen;
- eine Aggregationseinheit (402), die ausgelegt ist, um zu bestimmen, ob beliebige Benutzerverkehrsdaten, die mit einem beliebigen von dem ersten Benutzer und dem anderen Benutzer als dem ersten Benutzer verbunden sind, auf einer Speichereinheit (403) des Servers gespeichert sind, und um die empfangenen Daten mit den beliebigen Benutzerverkehrsdaten gemäß vordefinierten Aggregationsregeln zu aggregieren, die eine Zeitgrenze dafür definieren, wie alt zu aggregierende Daten sein können, sodass Benutzerverkehrsdaten aggregiert werden, die mit einem beliebigen von dem zumindest einen Client des Abonnenten oder dem einen oder den mehreren anderen Clients, die auf den anderen Benutzer als den ersten Benutzer registriert sind, verbunden sind;
- eine Verarbeitungseinheit (404), die ausgelegt ist, um die aggregierten und/oder empfangenen Daten auf Grundlage vordefinierter Verarbeitungskriterien zu verarbeiten, sodass aktualisierte Benutzerverkehrsstatistiken zu Verkehr in Verbindung mit dem Abonnenten erhalten werden, wobei die Verarbeitungskriterien spezifizieren, welche Art der Benutzerverkehrsdaten für welchen von dem zumindest einen Client des Abonnenten oder dem einen oder den mehreren Clients, die auf den anderen Benutzer als den ersten Benutzer registriert sind, aktualisiert zu halten ist, wobei die Verarbeitungseinheit ferner ausgelegt ist, um die Benutzerverkehrsstatistiken in der Speichereinheit zu speichern, wodurch Verteilung von aktualisierten Benutzerverkehrsstatistiken über eine Übertragungseinheit ermöglicht wird, wobei die Übertragungseinheit die verarbeiteten Benutzerverkehrsstatistiken auf einen Anwendungsserver verteilt, von dem aus der zumindest eine Client des Abonnenten oder der eine oder die anderen Clients, die auf den anderen Benutzer als den ersten Benutzer registriert sind, auf die Benutzerverkehrsstatistiken zugreifen können.

12. Server (400) nach Anspruch 11, wobei die Verarbeitungseinheit (404) ferner ausgelegt ist, um empfangene Benutzerverkehrsdaten auf einer Basis pro Angerufenem und/oder einer Basis pro Anrufer zu speichern.

## Revendications

1. Procédé, dans un réseau de communication, de fourniture de statistiques de trafic d'utilisateur sur le trafic d'utilisateur généré dans ledit réseau de communication et impliquant au moins un client auquel est enregistré un premier utilisateur, abonné d'un service lié auxdites statistiques de trafic d'utilisateur, et un ou plusieurs autres clients dont chacun est enregistré pour un utilisateur autre que le premier utilisateur, le procédé étant exécuté par un serveur et comprenant les étapes :
- de réception (501) de données de trafic d'utilisateur associées auxdits clients, lesdites données de trafic d'utilisateur étant interceptées par une unité d'interception de trafic ;
- comprenant le fait de déterminer (502) si des données de trafic d'utilisateur associées à l'un quelconque dudit premier utilisateur et dudit utilisateur autre que le premier utilisateur sont stockées sur ledit serveur, et l'agrégation (503) desdites données de trafic d'utilisateur avec les données reçues selon des règles d'agrégation prédéfinies qui définissent une limite temporelle fixant l'ancienneté maximale des données à agréger, de sorte que le trafic d'utilisateur associé à l'un quelconque dudit au moins un client dudit abonné ou desdits un ou plusieurs autres clients enregistrés pour ledit utilisateur autre que le premier utilisateur, est agrégé ;
- de traitement (504) des données agrégées et/ou reçues sur la base de critères de traitement prédéfinis, de sorte que l'on obtient des statistiques de trafic d'utilisateur à jour sur le trafic associé audit abonné, dans lequel les critères de traitement prédéfinis spécifient quel type desdites données de trafic d'utilisateur doivent être tenues à jour pour lequel desdits au moins un client dudit abonné ou desdits un ou plusieurs clients enregistrés pour ledit utilisateur autre que le premier utilisateur ;
- de stockage (505) des données traitées pour permettre la distribution desdites statistiques de trafic à jour audit au moins un client ou auxdits un ou plusieurs autres clients ; et
- de distribution desdites statistiques de trafic d'utilisateur traitées à un serveur d'application, à partir duquel ledit au moins un client dudit abonné ou lesdits un ou plusieurs autres clients enregistrés pour ledit utilisateur autre que le premier utilisateur peuvent accéder auxdites statistiques de trafic d'utilisateur.

2. Procédé selon la revendication 1, dans lequel les données de trafic d'utilisateur traitées sont stockées par appelé et/ou par appelant.

3. Procédé selon la revendication 2, dans lequel les données de trafic d'utilisateur traitées sont stockées par client pour chaque client enregistré pour un appelé et/ou un appelant respectif.

4. Procédé selon l'une quelconque des revendications 1 à 3, dans lequel l'agrégation est réalisée sur des données de trafic d'utilisateur sur des connexions établies entre lesdits clients.

5. Procédé selon l'une quelconque des revendications 1 à 4, dans lequel lesdites données de trafic d'utilisateur comprennent une ou plusieurs :
informations relatives à l'identité du client et/ou de l'utilisateur ;
informations relatives à l'emplacement ; et
informations relatives à la durée de la connexion.

6. Procédé selon l'une quelconque des revendications 1 à 5, dans lequel lesdites règles d'agrégation prédéfinies sont spécifiées au moins partiellement par l'opérateur du service de statistiques d'utilisateur et/ou par ledit abonné.

7. Procédé selon la revendication 6, dans lequel lesdites règles d'agrégation prédéfinies sont spécifiées de sorte que des statistiques de trafic d'utilisateur impliquant un groupe limité d'utilisateurs sont traitées pour ledit abonné.

8. Procédé selon la revendication 7, dans lequel le groupe limité d'utilisateurs est spécifié selon un carnet d'adresses électroniques dudit abonné.

9. Procédé selon l'une quelconque des revendications 1 à 8, comprenant l'étape supplémentaire de :
- distribution desdites statistiques de trafic d'utilisateur traitées à au moins l'un desdits clients, permettant ainsi une présentation graphique desdites statistiques de trafic d'utilisateur sur ledit au moins un desdits clients.

10. Procédé selon l'une quelconque des revendications 1 à 9, dans lequel les statistiques sont présentées sur la base d'une ou de plusieurs :
- de la quantité de connexions établies ;
- de la répartition géographique des connexions établies ;
- des longueurs des connexions établies ; et
- de la distance relative entre les clients impliqués dans les connexions établies.

11. Serveur (400), dans un réseau de communication, pour fournir des statistiques de trafic d'utilisateur sur le trafic d'utilisateur généré dans ledit réseau de communication et impliquant au moins un client auquel est enregistré un premier utilisateur, abonné d'un service lié auxdites statistiques de trafic d'utilisateur, et un ou plusieurs autres clients, chacun étant enregistré pour un utilisateur autre que le premier utilisateur, le serveur comprenant :
- une unité de réception (401), conçue pour recevoir, en provenance d'au moins une unité d'interception de trafic, des données de trafic d'utilisateur associées auxdits clients ;
- une unité d'agrégation (402), conçue pour déterminer si des données de trafic d'utilisateur associées à l'un quelconque du premier utilisateur et dudit utilisateur autre que le premier utilisateur sont stockées au niveau d'une unité de stockage (403) dudit serveur, et pour agréger les données reçues avec lesdites données de trafic d'utilisateur selon des règles d'agrégation définies qui définissent une limite temporelle fixant l'ancienneté maximale des données à agréger, de sorte que les données de trafic d'utilisateur associées à l'un quelconque dudit au moins un client dudit abonné ou desdits un ou plusieurs autres clients enregistrés pour ledit utilisateur autre que le premier utilisateur, sont agrégées ;
- une unité de traitement (404) conçue pour traiter lesdites données agrégées et/ou reçues sur la base de critères de traitement prédéfinis, de sorte que l'on obtient des statistiques de trafic d'utilisateur à jour sur le trafic associé audit abonné, dans lequel les critères de traitement spécifient quel type desdites données de trafic d'utilisateur doivent être tenues à jour pour lequel desdits au moins un client dudit abonné ou desdits un ou plusieurs clients enregistrés pour ledit utilisateur autre que le premier utilisateur, ladite unité de traitement étant en outre conçue pour stocker lesdites statistiques de trafic d'utilisateur dans ladite unité de stockage, permettant ainsi la distribution des statistiques de trafic d'utilisateur à jour par l'intermédiaire d'une unité de transmission, dans lequel ladite unité de transmission distribue lesdites statistiques de trafic d'utilisateur traitées à un serveur d'application à partir duquel ledit au moins un client dudit abonné ou lesdits un ou plusieurs autres clients enregistrés pour ledit utilisateur autre que le premier utilisateur peuvent accéder auxdites statistiques de trafic d'utilisateur.

12. Serveur (400) selon la revendication 11, dans lequel l'unité de traitement (404) est en outre conçue pour stocker les données de trafic d'utilisateur reçues par appelé et/ou par appelant.
